# EUROPEAN PATENT SPECIFICATION

(11) **EP 2 732 216 B1**
(45) Date of publication and mention of the grant of the patent: **11.01.2017**
(21) Application number: 12741047.0
(22) Date of filing: 11.07.2012
(51) Int. Cl.: F24H 1/20, H05B 3/34, F24H 9/18

(54) **HEATERS FOR FLUIDS**
FLUIDHEIZGERÄT
RÉCHAUFFEURS DE FLUIDES

(30) Priority: 12.07.2011 GB 201111920
(43) Date of publication of application: 21.05.2014
(73) Proprietor: Uniwarm Limited, Bovey Tracey TQ13 9BU (GB)
(72) Inventor: O'GRADY, Patrick James, Doncaster DN10 6EF (GB); KELLY, Andrew, Mexborough South Yorkshire S64 8NL (GB)
(74) Representative: Franks & Co Limited
(86) International application number: PCT/GB2012/000580
(87) International publication number: WO 2013/007969

(56) References cited:
- EP-A2- 0 199 566
- WO-A2-2008/091003
- US-A- 3 900 654
- US-A1- 2007 212 036
- US-A1- 2009 107 986
- US-A1- 2009 206 067
- US-A1- 2010 283 295

## Description

This invention relates to heaters for fluid storage tanks, and is particularly, but not necessarily exclusively concerned with domestic hot water storage tanks.

It has long been known to provide a storage tank for water in domestic or industrial premises, and to have associated heater means to ensure that water in the storage tank is brought to and/or maintained at a pre-determined temperature.

Predominantly and hitherto, three means of heating water have been used, one being a gas fired boiler that feeds hot water to the tank as and when water is drained from it and the second being an electric immersion heater strategically positioned in the tank, with associated control means including switches and thermostats such that the immersion heater can be switched ON and OFF or cycled between ON and OFF as pre-arranged or as determined by sensed water temperature.

With electrically powered domestic water heating systems the normal power requirement is 2-3KW, and such a power consumption can only be provided by power from the national grid. Such a power requirement cannot normally be sustained by renewable energy sources such as solar panels or wind driven generators.

Whilst gas and oil fired boilers are good at serving their required purpose of the rapid provision of heated water, it is generally accepted that they are an inefficient form of water heating, with much heat lost through the boilers exhaust or flue. Equally, it is generally accepted that electrical heaters such as immersion heaters with their high power requirement, particularly to heat cold water in a storage tank up to a predetermined temperature, and then reheat a tank as hot water is drawn from it and replaced by cold water, is inefficient and environmentally unacceptable.

A third know means to heat a fluid storage tank is the provision of a heating unit with a pliable cover which can be externally applied to a fluid storage tank, as described in US 2009/107986 (Naylor et al.)*.* It is a problem with external fluid storage tank heaters that the apparatus overheats and as such, the heaters have reduced efficiency.

The concern over environmental issues has caused a growth in the use of renewable energy supplies, such as solar panels to create a source of electrical power to a domestic or industrial building, but such solar panels, particularly in an array of a size to suit a domestic property, do not as is said above generate sufficient power to allow an electrical water heater such as an immersion heater to serve as an effective water heater, even in bright light conditions, and even less in reduced ambient light conditions.

The object of the present invention is to provide a heater for fluid storage tanks that overcomes those difficulties and concerns mentioned above, specifically the overheating of heating units which can be applied externally to a fluid storage tank.

According to the present invention, a heater for a fluid storage tank comprises a pad configured to cover a part at least of the height and periphery of the storage tank exterior, said pad comprising an outer layer of insulation material with an inner layer of heatable material secured to the outer layer of the insulation material; and there being at least four rails arranged transversely across the heater and parallel to each other; with electrical connection at a respective one end of each rail to a low voltage source of power, one electrical rail being disposed along one outer edge of the heatable material on the pad and another being disposed along the opposite outer edge of the heatable material, the other two electrical rails being disposed in close parallel relationship generally centrally of the heatable material, the rails at the outer edges of the heatable material having the same polarity, and the two generally centrally disposed rails having the opposite polarity; the at least four rails are configured to create two independent heating zones within the pad, each independent heating zone having an individually controlled thermostat located in the surface of the heatable material. By having the two centrally disposed rails of the same polarity opposite to that of the outer rails, a heat build up in the gap between them is avoided.

The provision of four parallel rails on the heatable material of the heater pad enables the provision of numerous power configurations in a single pad, with an attendant reduction in a self-heating effect and consequent reduction in the likelihood of any one electrical rail from burning out, whilst allowing an increased heating effect from the heatable material on the pad.

The heater is preferably formed as a sandwich construction, with an outer layer that is a flexible thermally insulating foam pad to one surface of which is applied a double sided adhesive film, the outer or exposed surface of which is provided with the heatable material, the outer or exposed surface of heatable material having applied a self-adhesive film with a peel-off mask. Further preferably, the double-sided adhesive film between the insulating pad and the heatable material and the self-adhesive film on the surface of the heatable material are thermally activatable.

The heatable material may be a flexible fabric with a surface coating formed as a carbon polymer, and preferably the parallel electrical rails are formed by screen printing a flexible silver loaded ink. Further preferably, the electrical connection to the electrical rails is by way of crimped or solder connection to which an electrical lead is attached.

Conductive inks with a loading of silver particles are of themselves known, but their uses such as on printed circuit boards do not normally require any attention to be paid to flexibility. Screen printing of conductive inks is also of itself known, but has involved the use of a relatively thick, 20 mesh screen, resulting in a relatively high resistivity due to a relatively low loading of silver particles. Research by the Applicants into the blending and thinning of inks, and into silver particle loadings has led to the development of a much improved screen printed rail, and in accordance with a preferred feature of the invention, each of the four parallel rails has a width not exceeding 15 mm and is screen printed utilising a 40 mesh screen, thereby creating rails that are highly conductive , flexible, exhibit a low voltage drop along their length, and do not exhibit a heat build-up in a rail due to current flow. This facilitates the provision of a relatively high heat output from the heatable material between the rails save for the in gap between centrally disposed rails.

Thus a heater in accordance with the invention can be attached directly to the outer surface of a storage tank, preferably towards its lower end, and the electrical rails connected to a suitable source of power providing a low voltage supply. Applying power across the rails causes a rapid heating of the heatable material to a required and predetermined temperature, which heat is transmitted through the wall of the storage tank and into the fluid (water) within the tank. Tests have established that a water tank of 210 litre volume can be heated using a 500 Watt heater pad from cold fill (approximately 19°C) to 40° C in less than 12 hrs and to 60° C in approximately 24 hrs.

An important advantage of the invention is that it allows easy fitting of the heater to an existing tank, either by a trained fitter or as a DIY item.

As for the heater pad itself, it is preferably a sandwich type construction of a 4 rail (two section) screen printed heater mat with two individually thermostatically controlled sections. Integral thermostats replace the main external tank thermostat. The front facing heat transfer layer is self adhesive (double sided) and the heating face of the heatable material is applied to the other and then sandwiched between the front adhesive layer and the high density foam insulation sheet. The rear of the sandwich is made up of two other self adhesive layers of high density foam insulation sheet of apx 3 mm thick the first layer is cut out to conceal wiring connections and the thermostats. The final sheet may be screen printed with a logo and directly applied over the first layer of insulation to form the completed pad construction.

An essential advantage of the invention is that the heater pad may be connected to such as solar cells fitted to the roof of a building, and during normal hours of daylight, the power supplied to the fluid tank to which the heater pad is fitted is more than sufficient to allow the rapid heating of fluid to such as a required 60°C in a domestic hot water tank. By having a control unit in the connection of the heater pad to the solar cells, and by having thermostats inbuilt in to the surface of the heatable material, the electrical rails can be disconnected from the solar cells when the water tank is at the required temperature, and reconnected immediately hot water is drawn from the tank, and the tank refilled with cold water.

By having two independent heating zones on the pad between the outer rails and the respective central rails, in the unlikely event that one heating zone malfunctions, the other can adequately keep the tank at a required temperature, during normal hot water usage.

The control unit may also serve the secondary function of providing a connection of the heater of the invention to mains electricity via an appropriate transformer, such that during the hours of darkness, and times of poor light conditions, the controller may be such as to sense that inadequate power is being provided by the solar panels, and cause the power supply to switch to mains supply at a required, e.g. 24 volt DC, level.

The intended construction means that several pads can be connected together if desired for larger installations. The nature of the construction and silver ink screen printing of the heatable material allows larger or customisable heat pads to be constructed as one individual pad or several inter connectable individual pads. The construction utilises integral thermostats and as such means that each individual section is controlled independently and thus will automatically turn off each heater section as the desired temperature is achieved so reducing power consumption.

One embodiment of the invention will now be described with reference to the accompanying drawings in which:-
Figure 1 is a front elevation of a water tank provided with a heater pad in accordance with the invention;
Figure 2 is a schematic perspective view of a heater pad in accordance with the invention; and
Figure 3 is a schematic representation of heater pad rail and voltage configuration to provide different heating effects.

In the drawings, a heater tank 1 in the form of a relatively conventional domestic hot water cylinder, has an external cover of insulation material 2 and at its lower end, is provided with a heater pad 3 in accordance with the invention. The heater pad may be retro-fitted as a DIY item, by cutting an appropriate rectangular hole 4 (or other shape to suit a non-rectangular heater pad) into which the pad is fitted.

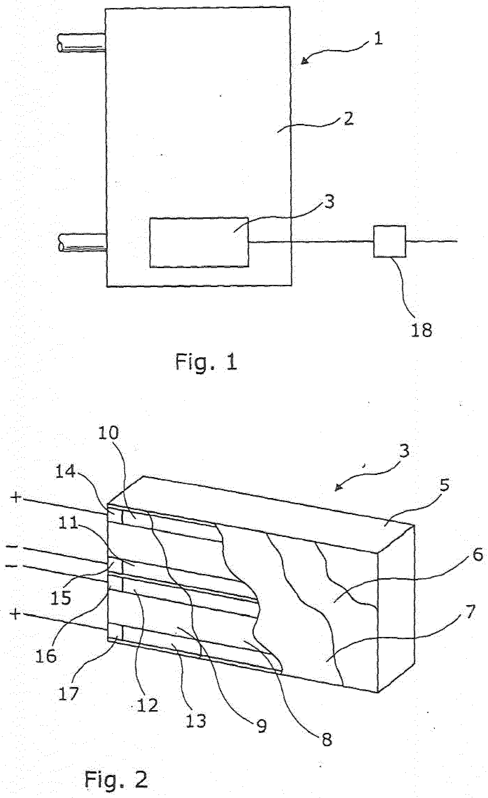

As is shown by Figure 2, the heater pad has an outer layer of insulation material 5, on the inner face of which is provided a layer of double sided adhesive 6, to secure a carbon polymer heatable material, in the form of a flexible fabric 7 coated with the carbon polymer material 8. On the exposed surface of the carbon polymer material is a coating 9 of an adhesive material. Four electrical rails 10, 11, 12, 13 are provided, by screen printing a conductive ink, and an electrical lead is provided to each rail and secured by a crimped connection 14, 15, 16, 17 respectively.

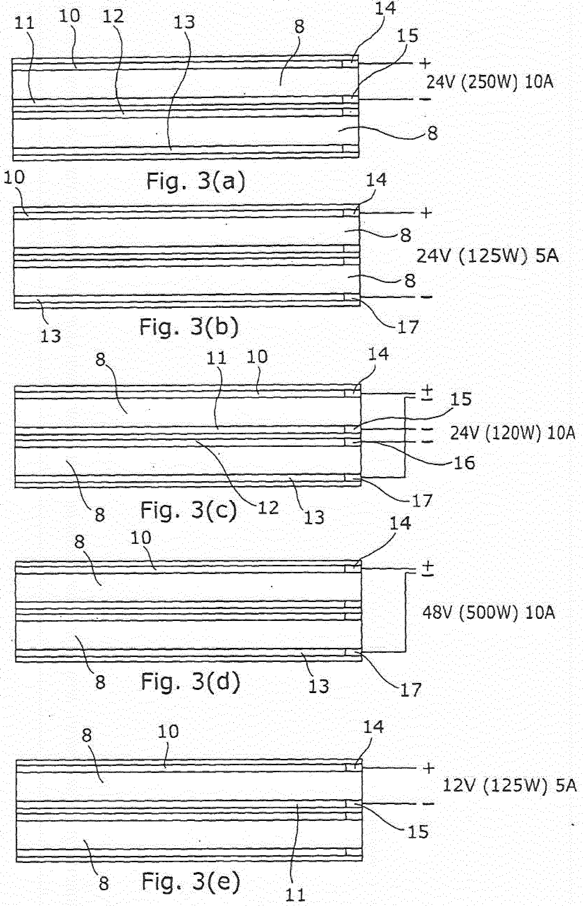

To explain the heating effects that can be provided, reference is now made to Figure 3, the schematic representations of a two-strip heating means according to the invention. In Figure 3 it is shown how voltages of 12V and 48V can be used to provide a number of power outputs and hence heating effects on the heatable material.

It will be understood that the electrical leads from the rails can be connected to a control unit 18 that can receive signals from a thermostat in the tank, and power from such as solar panels and/or from mains via a transformer, the control unit having appropriate switching means, manually or automatically operable, such that, and for example full power across both strips of the heatable material provide a maximum heating effect to bring the temperature of water in the tank to a required level, and can switch on or off, or change the power supply to one strip or the other, to suit the heating requirement of the tank as hot water is used, or as the tank cools.

By enabling the low power output from such as solar panels to be used to provide a high heat input to a water storage tank, it makes the use of solar panels that much more attractive to builders for installation in new properties and the retrofitting of solar panels in existing properties, with the certainty of the maintenance of a hot water supply by being able to use the back-up of power supplied from the grid, but reduced to 6, 12, 24 or 48V as required.

## Claims

1. A heater for a fluid storage tank comprising:
a pad (3) configured to cover a part at least of the height and periphery of the storage tank exterior, said pad (3) comprising:
an outer layer (5) of insulation material with;
an inner layer (8) of heatable material secured to the outer layer of the insulation material; and
at least four rails arranged transversely across the heater and parallel to each other (10, 11, 12, 13);
with an electrical connection (14, 15, 16, 17) at a respective one end of each rail to a low voltage source of power;
**characterised in that** one electrical rail (10) being disposed along one outer edge of the heatable material (8) on the pad; and
another rail (13) being disposed along the opposite edge of the heatable material, the other two electrical rails (11, 12) being disposed in close parallel relationship generally centrally of the heatable material;
the rails (10, 13) at the outer edges of the heatable material having the same polarity; and
the two generally centrally disposed rails (11, 12) having the opposite polarity;
the at least four rails (14, 15, 16, 17) are configured to create two independent heating zones within the pad, each independent heating zone having an individually controlled thermostat located in the surface of the heatable material.

2. A heater for a fluid storage tank as in Claim 1, **characterised in that** the at least four rails provided on the heatable material to create two independent heating zones, are spaced between the two generally centrally disposed rails of the same polarity creating a cold zone along the gap, whereby to assist in the prevention of overheating, and allow for the selective and separate use of each heating zone.

3. A heater for a fluid storage tank as in Claim 1 or Claim 2, **characterised in that** the outer layer of insulating material is provided with a facing of double sided adhesive film to which the heatable material is secured, the exposed face of the heatable material being provided with a self-adhesive film with a peel-off mask.

4. A heater for a fluid storage tank as in Claim 3, **characterised in that** the two adhesive films are both thermally activatable.

5. A heater for a fluid storage tank as in any of Claims 1 to 4, **characterised in that** the heatable material is a flexible fabric with a surface coating formed as a polymer carbon.

6. A heater for a fluid storage tank as in any of Claims 1 to 5, **characterised in that** the electrical rails are each formed by screen printing a flexible silver loaded ink.

7. A heater for a fluid storage tank as in Claim 6, **characterised in that** the electrical connection to a source of power is a crimped connection.

8. A heater for a fluid storage tank as in Claim 6, **characterised in that** the electrical connection to a source of power is a soldered connection.

9. A heater for a fluid storage tank as in any of Claims 6 to 8, **characterised in that** the electrical rails have a width not exceeding 15 mm and are screen printed utilising a 40 mesh screen.

10. A heater for a fluid storage tank as in any of Claims 1 to 9, **characterised in that** the electrical rails are connected to a first source of power by way of a control unit connected to said individually controlled thermostats located in the surface of the heatable material, whereby said individually controlled thermostats are configured to disconnect the rails from the first source of power when a desired fluid temperature is achieved.

11. A heater for a fluid storage tank as in Claim 10, wherein the control unit is configured to also provide a connection of the electrical rails to an alternative source of power in the event that the first source of power is inadequate to heat the fluid in the tank to a required degree.

12. A heater for a fluid storage tank as in Claim 11, wherein the first source of power is from a renewable energy source, and the second source of power is a mains supply via an appropriate transformer.

## Patentansprüche

1. Heizgerät für einen Fluidlagertank, umfassend:
ein Pad (3), das konfiguriert ist zum Bedecken mindestens eines Teils der Höhe und Peripherie des Lagertankäußeren, wobei das Pad (3) Folgendes umfasst:
eine Außenschicht (5) aus Isolationsmaterial mit;
einer Innenschicht (8) aus erhitzbarem Material, an der Außenschicht des Isolationsmaterials befestigt; und
mindestens vier Schienen, quer über dem Heizgerät und parallel zueinander angeordnet (10, 11, 12, 13);
mit einer elektrischen Verbindung (14, 15, 16, 17) an einem jeweiligen Ende jeder Schiene zu einer Niederspannungsstromquelle;
**dadurch gekennzeichnet, dass** eine elektrische Schiene (10) entlang einem Außenrand des erhitzbaren Materials (8) auf dem Pad angeordnet ist; und
eine andere Schiene (13) entlang dem entgegengesetzten Rand aus dem erhitzbaren Material angeordnet ist, wobei die anderen beiden elektrischen Schienen (11, 12) in enger paralleler Beziehung allgemein zentral von dem erhitzbaren Material angeordnet sind;
die Schienen (10, 13) an den Außenrändern des erhitzbaren Materials die gleiche Polarität besitzen; und
die zwei allgemein zentral angeordneten Schienen (11, 12) die entgegengesetzte Polarität besitzen;
die mindestens vier Schienen (14, 15, 16, 17) konfiguriert sind zum Erzeugen von zwei unabhängigen Heizzonen innerhalb des Pads, wobei jede unabhängige Heizzone einen individuell gesteuerten Thermostat besitzt, der sich an der Oberfläche des erhitzbaren Materials befindet.

2. Heizgerät für einen Fluidlagertank nach Anspruch 1, **dadurch gekennzeichnet, dass** die an dem erhitzbaren Material vorgesehenen mindestens vier Schienen zum Erzeugen von zwei unabhängigen Heizzonen zwischen den beiden allgemein zentral angeordneten Schienen mit der gleichen Polarität beabstandet sind unter Erzeugung einer kalten Zone entlang des Spalts, wodurch die Verhinderung des Überhitzens unterstützt wird und die selektive und separate Verwendung jeder Heizzone gestattet wird.

3. Heizgerät für einen Fluidlagertank nach Anspruch 1 oder 2, **dadurch gekennzeichnet, dass** die Außenschicht aus Isoliermaterial mit einer Verkleidung aus doppelseitigem Klebefilm versehen ist, an dem das erhitzbare Material befestigt ist, wobei die exponierte Fläche des erhitzbaren Materials mit einem Selbstklebefilm mit einer Abziehmaske versehen ist.

4. Heizgerät für einen Fluidlagertank nach Anspruch 3, **dadurch gekennzeichnet, dass** die beiden Klebefilme beide thermisch aktivierbar sind.

5. Heizgerät für einen Fluidlagertank nach einem der Ansprüche 1 bis 4, **dadurch gekennzeichnet, dass** das erhitzbare Material ein flexibles Gewebe ist mit einer als ein Polymer-Carbon ausgebildeten Oberflächenbeschichtung.

6. Heizgerät für einen Fluidlagertank nach einem der Ansprüche 1 bis 5, **dadurch gekennzeichnet, dass** die elektrischen Schienen jeweils durch Siebdrucken einer flexiblen, mit Silber gefüllten Tinte ausgebildet werden.

7. Heizgerät für einen Fluidlagertank nach Anspruch 6, **dadurch gekennzeichnet, dass** die elektrische Verbindung zu einer Stromquelle eine gecrimpte Verbindung ist.

8. Heizgerät für einen Fluidlagertank nach Anspruch 6, **dadurch gekennzeichnet, dass** die elektrische Verbindung zu einer Stromquelle eine gelötete Verbindung ist.

9. Heizgerät für einen Fluidlagertank nach einem der Ansprüche 6 bis 8, **dadurch gekennzeichnet, dass** die elektrischen Schienen eine Breite von höchsten 15 mm besitzen und unter Verwendung eines 40-Mesh-Gitters siebgedruckt werden.

10. Heizgerät für einen Fluidlagertank nach einem der Ansprüche 1 bis 9, **dadurch gekennzeichnet, dass** die elektrischen Schienen mit einer ersten Stromquelle über eine Steuereinheit verbunden sind, die mit den an der Oberfläche des erhitzbaren Materials befindlichen individuell gesteuerten Thermostaten verbunden ist, wodurch die individuell gesteuerten Thermostate konfiguriert sind zum Trennen der Schienen von der ersten Stromquelle, wenn eine gewünschte Fluidtemperatur erreicht ist.

11. Heizgerät für einen Fluidlagertank nach Anspruch 10, wobei die Steuereinheit konfiguriert ist zum zusätzlichen Bereitstellen einer Verbindung der elektrischen Schienen mit einer alternativen Stromquelle für den Fall, dass die erste Stromquelle inadäquat ist, das Fluid in dem Tank bis zu einem gewünschten Grad zu erhitzen.

12. Heizung für einen Fluidlagertank nach Anspruch 11, wobei die erste Stromquelle von einer erneuerbaren Energiequelle ist und die zweite Stromquelle ein Versorgungsnetz über einen entsprechenden Transformator ist.

## Revendications

1. Réchauffeur pour un réservoir de stockage de fluide, comprenant :
un coussin (3) configuré pour recouvrir une partie d'au moins la hauteur et la périphérie de l'extérieur du réservoir de stockage, ledit coussin (3) comprenant :
une couche externe (5) de matériau isolant avec ;
une couche interne (8) de matériau apte à être chauffé, fixé sur la couche externe du matériau isolant ; et
au moins quatre rails (10, 11, 12, 13) disposés transversalement à travers la réchauffeur et parallèles entre eux ;
avec une connexion électrique (14, 15, 16, 17) à une source d'alimentation basse tension au niveau d'une extrémité respective de chaque rail, ;
**caractérisé en ce qu'**un rail électrique (10) est disposé le long d'un bord externe du matériau apte à être chauffé (8) sur le coussin ; et
un autre rail (13) est disposé le long du bord opposé du matériau apte à être chauffé, les deux autres rails électriques (11, 12) étant disposés en relation parallèle étroite, généralement au centre du matériau apte à être chauffé ;
les rails (10, 13), au niveau des bords externes du matériau apte à être chauffé, ayant la même polarité ; et
les deux rails (11, 12), disposés généralement au centre, ayant la polarité opposée ;
les au moins quatre rails (14, 15, 16, 17) sont configurés de façon à créer deux zones de chauffage indépendantes dans le coussin, chaque zone de chauffage indépendante ayant un thermostat commandé de manière individuelle, situé dans la surface du matériau apte à être chauffé.

2. Réchauffeur pour un réservoir de stockage de fluide selon la revendication 1, **caractérisé en ce que** les au moins quatre rails prévus sur le matériau apte à être chauffé de façon à créer deux zones de chauffage indépendantes sont espacés entre les deux rails de même polarité, disposés généralement au centre, créant une zone froide le long de l'espace, afin d'aider à empêcher une surchauffe, et à permettre l'utilisation sélective et séparée de chaque zone de chauffage.

3. Réchauffeur pour un réservoir de stockage de fluide selon la revendication 1 ou la revendication 2, **caractérisé en ce que** la couche externe du matériau isolant est parée d'un film adhésif double face auquel le matériau apte à être chauffé est fixé, la face exposée du matériau apte à être chauffé étant pourvue d'un film auto-adhésif ayant un masque pelable.

4. Réchauffeur pour un réservoir de stockage de fluide selon la revendication 3, **caractérisé en ce que** les deux films adhésifs sont tous les deux activables à la chaleur.

5. Réchauffeur pour un réservoir de stockage de fluide selon l'une quelconque des revendications 1 à 4, **caractérisé en ce que** le matériau apte à être chauffé est un tissu flexible ayant un revêtement de surface formé sous la forme d'un carbone polymère.

6. Réchauffeur pour un réservoir de stockage de fluide selon l'une quelconque des revendications 1 à 5, **caractérisé en ce que** les rails électriques sont chacun formés par impression au cadre d'une encre chargée d'argent flexible.

7. Réchauffeur pour un réservoir de stockage de fluide selon la revendication 6, **caractérisé en ce que** la connexion électrique à une source d'alimentation est une connexion sertie.

8. Réchauffeur pour un réservoir de stockage de fluide selon la revendication 6, **caractérisé en ce que** la connexion électrique à une source d'alimentation est une connexion soudée.

9. Réchauffeur pour un réservoir de stockage de fluide selon l'une quelconque des revendications 6 à 8, **caractérisé en ce que** les rails électriques ont une largeur n'excédant pas 15 mm et sont imprimés au cadre à l'aide d'un cadre de maillage 40 mesh.

10. Réchauffeur pour un réservoir de stockage de fluide selon l'une quelconque des revendications 1 à 9, **caractérisé en ce que** les rails électriques sont connectés à une première source d'alimentation au moyen d'une unité de commande connectée auxdits thermostats commandés de manière individuelle, situés dans la surface du matériau apte à être chauffé, lesdits thermostats commandés de manière individuelle étant configurés pour déconnecter les rails de la première source d'alimentation lorsqu'une température de fluide souhaitée est atteinte.

11. Réchauffeur pour un réservoir de stockage de fluide selon la revendication 10, dans lequel l'unité de commande est configurée pour fournir également une connexion des rails électriques à une autre source d'alimentation dans le cas où la première source d'alimentation est inadéquate pour chauffer le fluide dans le réservoir à un degré requis.

12. Réchauffeur pour un réservoir de stockage de fluide selon la revendication 11, dans lequel la première source d'alimentation provient d'une source d'énergie renouvelable, et la deuxième source d'alimentation est une alimentation secteur via un transformateur approprié.
